**Europäisches Patentamt**

**European Patent Office**

**Office européen des brevets**

(19)

(11) **EP 1 551 002 A2**

(12) **EUROPEAN PATENT APPLICATION**

(43) Date of publication:
06.07.2005 Bulletin 2005/27

(51) Int Cl.⁷: **G09G 3/34**

(21) Application number: **04020425.7**

(22) Date of filing: **27.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **05.01.2004 JP 2004000206**

(71) Applicant: **FUJITSU LIMITED**
**Kawasaki-shi, Kanagawa 211-8588 (JP)**

(72) Inventors:
• **Miyazaki, Shingo c/o Fujitsu Limited**
 **Kawasaki-shi Kanagawa 211-8588 (JP)**
• **Kimura, Yoji c/o Fujitsu Limited**
 **Kawasaki-shi Kanagawa 211-8588 (JP)**
• **Hirosue, Yoji c/o Fujitsu Limited**
 **Kawasaki-shi Kanagawa 211-8588 (JP)**

(74) Representative: **HOFFMANN - EITLE**
**Patent- und Rechtsanwälte**
**Arabellastrasse 4**
**81925 München (DE)**

(54) **Control of synchronization of backlight for liquid crystal display apparatus**

(57)     A display apparatus is capable of switching the operation of a backlight for illuminating a liquid crystal panel, between a synchronization mode supporting a moving image for flashing the backlight in synchronism with switching of frames of the image and a non-synchronization mode supporting a static image for flashing the backlight in asynchronism. A moving image process detecting unit detects a moving image process for displaying a moving image on a display apparatus among the processes currently being executed. A screen state monitoring unit determines that the moving image screen detected by the moving image process detecting unit is maximized and positioned at the foreground, and instructs the display apparatus to switch the backlight into the synchronization mode.

FIG. 1A

# FIG. 1B

## Description

BACKGROUND OF THE INVENTION

1. Field of the Invention

The present invention relates generally to an illumination control apparatus, a display apparatus, a display control apparatus and a display control program for displaying moving images on a liquid crystal device illuminated by a backlight, and more particularly to an illumination control apparatus, a display apparatus, a display control apparatus and a display control program for flashing or normally lighting a backlight in response to display of a moving image or a static image.

2. Description of the Related Arts

In recent years, as a display apparatus employingabacklighting-systemliquidcrystal device of a personal computer, a display apparatus having a scan-flashing system for flashing the backlight being synchronized with the switching of frames of images (the vertical synchronization signal) in order to improve the display quality by reducing the impression of afterimage given while the reproducing of a moving image such as a television image, has been developed and its dissemination has been started. That is, for a conventional display apparatus, when it is driven at a frame frequency of 60Hz, the frame cycle is 16ms, however, the response rate of the liquid crystal is slower than that and is approximately 25ms. Therefore, there is a problem that the image of the frame immediately before the present frame remains in the present frame as the afterimage. In order to solve this problem, the backlight is controlled and flashed being synchronized with the driving frequency of the LC panel such that the backlight is turned off for the first half of a frame cycle during which the variation of the image caused by the redrawing of the LC panel is drastic and the backlight is turned on at a timing for the second half of the frame cycle during which the variation of the image approaches its end, for every redrawing of the liquid crystal (LC) panel at the frame cycle. In a display apparatus having such a scan-flashing system, operation modes of the backlight can be selected and set as necessary by operating buttons provided to the display apparatus, or by operating, using a mouse, radio buttons provided in the dialogue for setting the di splay conditions in the screen tool bar, and for switching between a synchronization mode for moving images and a non-synchronization mode for static images.
Furthermore, a recent personal computer is adapted to receive and reproduce TV broadcasting by incorporating a TV tuner. In this case, a backlight operation mode supporting moving images is automatically selected (see Japanese Patent Application Laid-Open Publication Nos. 2001-210122, 2002-287700, 2002-091400 and 2001-331156).

However, in such a conventional backlight scan-flashing system, the backlight operation mode is adapted to be selected and set by a user for displaying an image accompanied by execution of an application. Therefore, in the case where the synchronization mode is set for viewing a moving image, a static image flickers due to the flicker of the backlight when the moving image application has stopped and a static image returns on the screen.
Therefore, it is necessary to release the synchronization mode and set the non-synchronization and there is a problem that the operation for selecting an operation mode of the backlight according to an application used and for releasing the operation mode becomes complicated. Furthermore, in the case where a plurality of applications including one for viewing a moving image are simultaneously being run, for example, there also are times when a window for an application is focused to be the foreground screen while viewing the moving image. In these cases, it is impossible to require the user operation for releasing the synchronization mode of the backlight every time the window is focused and, as a result, there is a deficiency that a static image on the window is viewed in a state where it flickers. Furthermore, in a conventional backlight operation mode supporting moving images, the backlight is controlled and flashed for every frame cycle being synchronized with the vertical synchronization signal. Therefore, there are times when the flashing of the backlight and the redrawing of an image on the LC panel are not matched in terms of timing.
Especially when the LC panel is divided into a plurality of areas in the vertical direction and the image is redrawn on one area after another, flashing control of the backlight synchronized with the vertical synchronization signal has a problem that coordination with the timing for redrawing on the divided areas of the LC panel becomes complicated.

SUMMARY OF THE INVENTION

According to the present invention there are provided an illumination control apparatus , a display apparatus, a display control apparatus and a display control program for selecting and setting an operation mode of a backlight in response to the state of an image displayed on a screen of a display apparatus without requiring operation of a user.
According to the present invention there are provided an illumination control apparatus, a display apparatus, a display control apparatus and a display control program enabling control and flashing of a backlight appropriately corresponding to redrawing of an image on a display unit such as an LC panel in a backlight operation mode supporting a moving image.

An aspect of the invention provides an illumination control apparatus. That is, the invention is characterized in that the illuminationcontrolapparatusforcontrolling an illumination device (backlight) illuminating a display apparatus (LC panel) that redraws a plurality of divided display areas one after another and having a plurality of divided illuminating areas comprises an illumination control unit for starting control of illuminating the illuminating areas one after another in response to the start of the redrawing of the display areas. In this illumination control apparatus, the image displayed by the display apparatus is a moving image. Furthermore, in the illumination control apparatus, when the image displayed by the display apparatus is not a moving image, a plurality of illuminating areas are simultaneously controlled and turned on in response to a predetermined frequency. In the illumination control apparatus, after the variation of an image in the plurality of display areas each of which each illuminating area corresponds to has ceased, the illuminating areas are controlled and turned on. In the illumination control apparatus, the brightness of the display apparatus is adjusted by the time for which each illuminating area is turned on. In the illumination control apparatus, a sequential redrawing signal to be the criterion of the control of turning on of each illuminating area is generated from a redrawing signal of the display areas. During predetermined variation of this sequential redrawing signal, control is provided such that the corresponding illuminating areas are turned off and are turned on after the elapse of a given time.

Another aspect of the invention provides a display apparatus. That is, the display apparatus including a display unit for redrawing one after another a plurality of divided display areas and an illuminating unit illuminating the display unit and having a plurality of divided illuminating areas, comprises an illumination control unit for starting control such that the illuminating areas are illuminated one after another in response to the start of the redrawing of the display areas. In this display apparatus, the image displayed is a moving image.

Furthermore, in the display apparatus, when the image displayed is not a moving image, the illuminating areas are simultaneously controlled and turned on in response to a predetermined frequency. In the display apparatus, after the variation of an image in the plurality of display areas each of which each illuminating area corresponds to has ceased, the illuminating areas are controlled and turned on. In the display apparatus, the brightness of the display apparatus is adjusted by the time for which each illuminating area is turned on. In the display apparatus, a turning-on control signal for each illuminating area is generated from a sequential redrawing signal of the display areas. In the display apparatus, control is executed such that, during predetermined variation of the sequential redrawing signal, the corresponding illuminating areas are turned off and are turned on after the elapse of a given time.

A further aspect of the invention provides an information apparatus. That is, the information apparatus for executing a plurality of processes and displaying an image by controlling the display apparatus, comprises a moving image process detecting unit for detecting a moving image process displaying a moving image on a display apparatus from among the processes being executed, and a display control unit for providing the display unit with instruction of display control of reducing flickering when the moving image process detecting unit has detected a moving image display. This information apparatus further comprises a screen state monitoring unit for monitoring the display state of the moving image process wherein the display control unit provides the display apparatus with instruction of display control of reducing flickering when the display of the moving image process is larger than a predetermined size. In the information apparatus, the display control unit provides instruction of display control of reducing flickering when the size of the display of the moving image process is equal to the size of the display area of the display apparatus. In the information apparatus, instruction of display control is issued in conformity to DDC-2bl standard provided by VESA standard.

Yet another aspect of the invention provides an information control apparatus.

That is, the invention is characterized in that the information control apparatus for executing a plurality of processes and displaying an image by controlling the display apparatus, comprises a moving image process detecting unit for detecting a moving image process displaying a moving image on a display apparatus from among the processes being executed, and a display control unit for providing the display apparatus with instruction of display control of reducing flickering when the moving image process detecting unit has detected a moving image display. This information control apparatus further comprises a screen state monitoring unit for monitoring the display state of the moving image process wherein the display control unit provides the display apparatus with instruction of display control of reducing flickering when the display of the moving image process is larger than a predetermined size. In the information control apparatus, the display control unit provides the display apparatus with instruction of display control of reducing flickering when the size of the display of the moving image process is equal to the size of the display area of the display apparatus. In the information control apparatus, instruction of display control is issued in conformity to DDC-2bl standard provided by VESA standard.

A still further aspect of the invention provides a display control program. That is, the display control program of the invention causes a computer to run a moving image process detecting step for detecting a moving image process displaying a moving image on a display apparatus and a display control step for providing the display apparatus with instruction of display control of reducing flickering when a moving image display is detected at the moving image process detecting step. This program further causes the computer to run a screen state monitoring step for monitoring the state of display of the moving image process, wherein instruction of display control of reducing flickering is given to the display apparatus when the size of the display of the moving image process is larger than a predetermined size. In the program, instruction of display control of reducing flickering is given to the display apparatus when the size of the display of the moving image process is equal to the size of the display area of the display apparatus. In the program, instruction of display control is issued in conformity to DDC-2bl standard provided by VESA standard.

According to the invention, in response to display contents executed by an application, without requiring user operation, the display quality of a moving image is improved by setting a synchronization mode of a backlight and by reducing the impression of afterimage of the moving image by flashing the backlight being synchronized with frame switching of the image when displaying a moving image, flickering of the screen caused by not releasing the synchronization mode can be prevented by flashing the backlight being not synchronized with the frame switching of the backlight when displaying a static image. Therefore, improvement of the image quality when an moving image is displayed and when a static image is displayed, that are mutually exclusive events can be possible simultaneously. Furthermore, in the case where a plurality of applications including one for viewing a moving image are simultaneously being run, when a window for another application is focused to make a static image window the foreground screen from a moving image display, the static image quality can be improved by preventing flickering of the static image window by switching the backlight operation mode from the synchronization mode to the non-synchronization mode, and the moving image quality can be improved by flashing of the backlight when display is returned again to the moving image. The display apparatus of the invention can control flashing of the backlight approximately synchronized with image redrawing of the divided display areas such that it turns on the backlight at a timing for the second half of an image redrawing frame cycle during which a time period determined in response to the intensity adjustment has passed from the start of the image redrawing for each divided display areas, and turns off the backlight at a timing for the image redrawing of the next frame cycle by controlling to flash the backlight being synchronized with a data enable signal to control the sequential redrawing of the divided display areas of the LC panel in the synchronization mode supporting a moving image, and the after image caused by the delay of the LC response can be reduced. Furthermore, generation of a flashing control signal can be realized with a simple circuit composition since the flashing of the backlight is controlled by division of the data enable signal used for the image redrawing.

Furthermore, the image quality can be improved by eliminating a stripe pattern appearing on a static image displayed on the LC panel by employing the arithmetic mean frequency of an n-fold frequency and an n-1-fold frequency that are multiplied frequencies of the frame frequency, as the driving frequency of the control of the flashing in the non-synchronization mode supporting a static image.

The above and other objects, features, and advantages of the present invention will become more apparent from the following detailed description with reference to the drawings.

BRIEF DESCRIPTION OF THE DRAWINGS

Figs. 1A and 1B are block diagrams of the functional constitution being an embodiment of an image display apparatus according to the invention;

Fig. 2 illustrates the hardware configuration of a computer to which the invention is applied;

Figs. 3A and 3B illustrate command sets according to 2Bi standard provided under VESA standard;

Figs. 4A and 4B illustrate commands for window information relating to API containing commands used in the invention;

Fig. 5 shows a flowchart of a image monitoring process according to the invention;

Fig. 6 is an exploded view of the display apparatus used in the invention;

Fig. 7 is an exploded view of the backlight shown in Fig. 6;

Fig. 8 is a block diagram of the backlight control circuit shown in Figs. 1A and 1B;

Fig. 9 illustrates the arrangement of cold cathode tubes incorporated in the backlight driven by driving unit shown in Fig. 8;

Figs. 10A and 10B are circuit block diagrams showing the details of the backlight control circuit shown in Fig. 8;

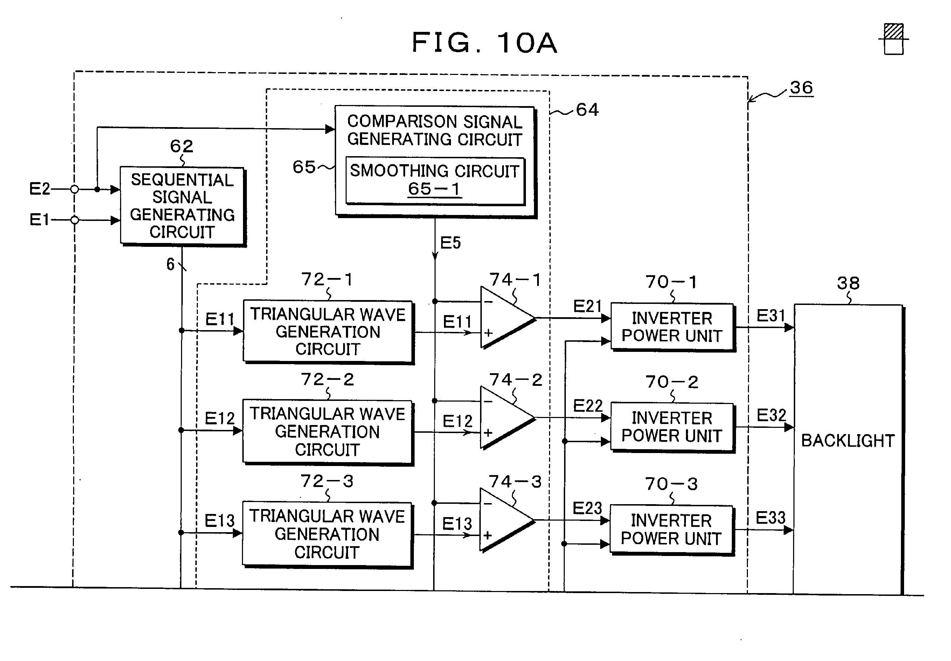

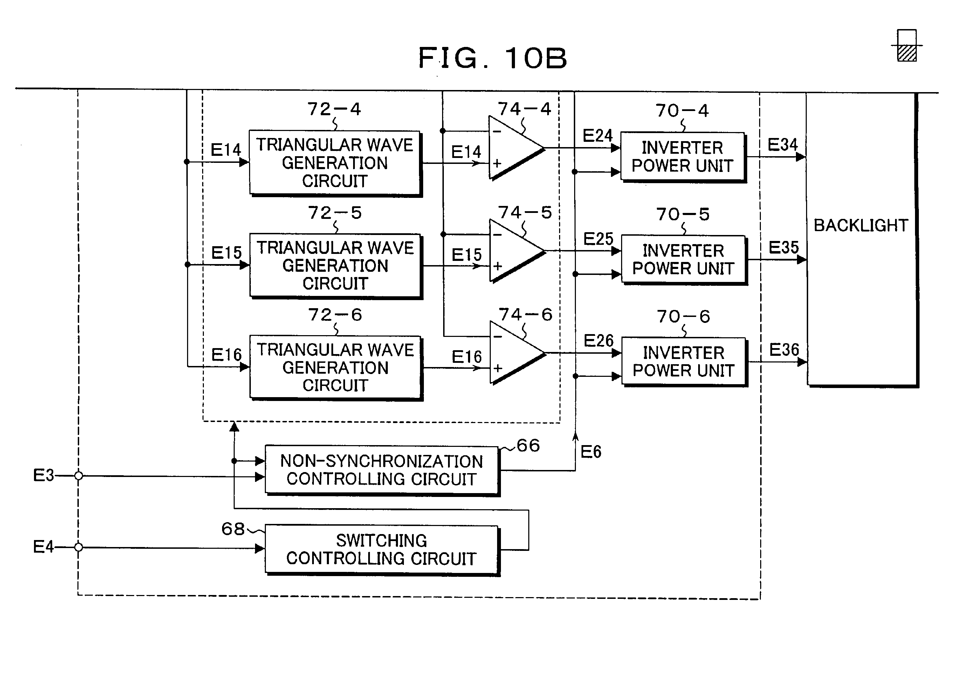

Figs . 11A to Figs . 11I show time charts in the synchronization mode supporting a moving image for the backlight control circuit shown in Figs. 10A and 10B;

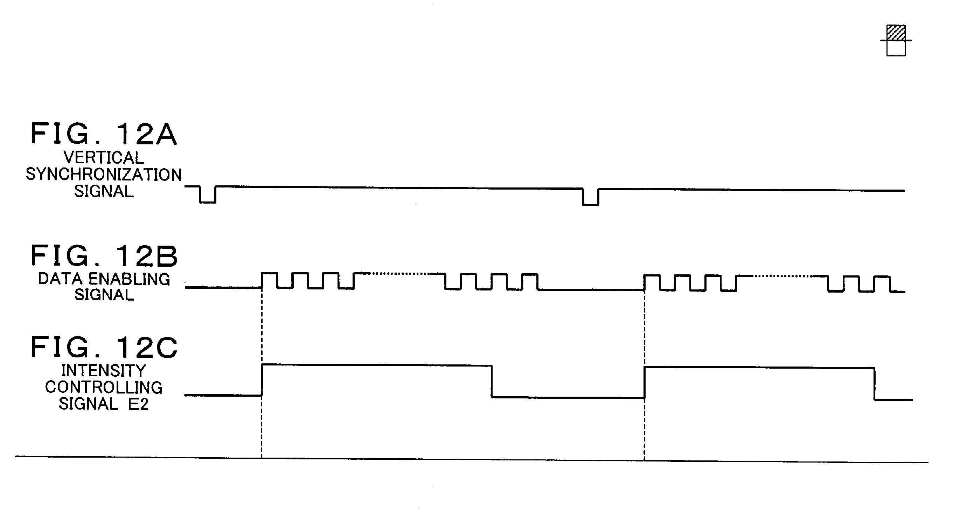

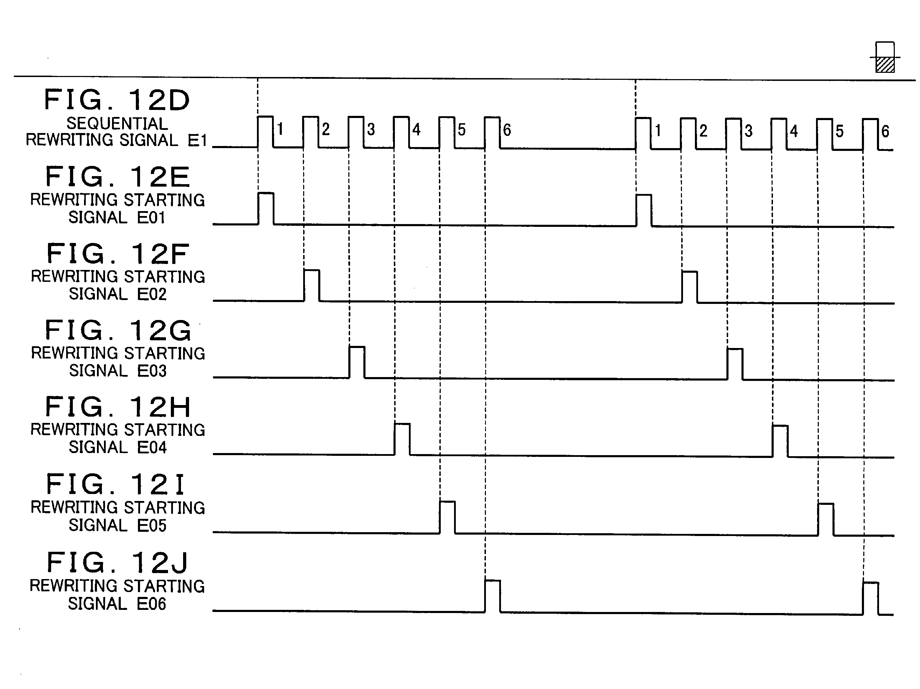

Figs. 12A to Figs. 12J show time charts of the redrawing start signals generated from a sequential redrawing signal synchronized with a data enable signal;

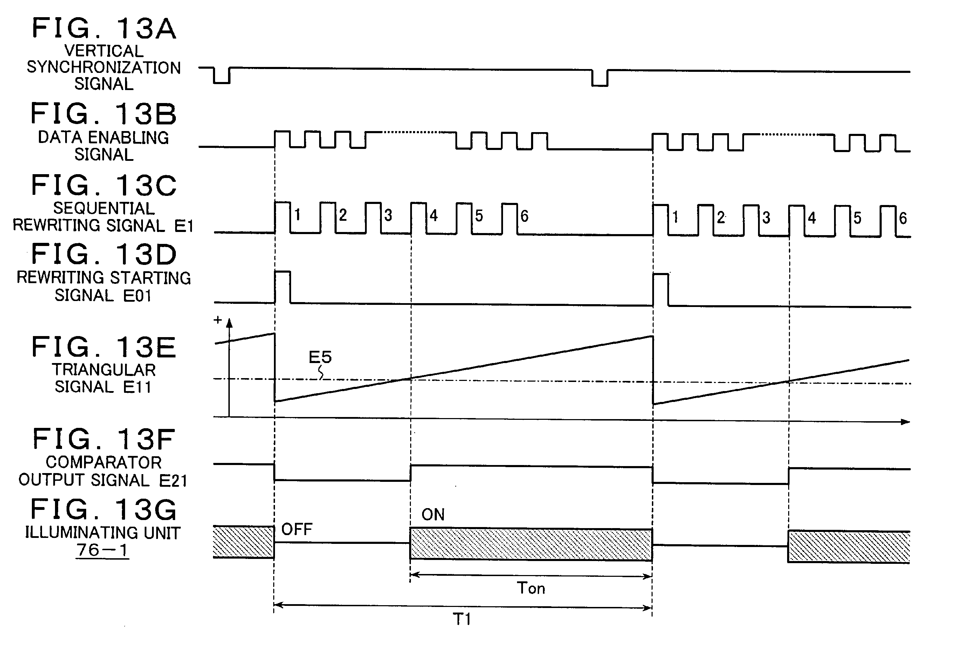

Figs. 13A to Figs. 13G show time charts of a backlight flashing control signal generated based on the redrawing start signal; and

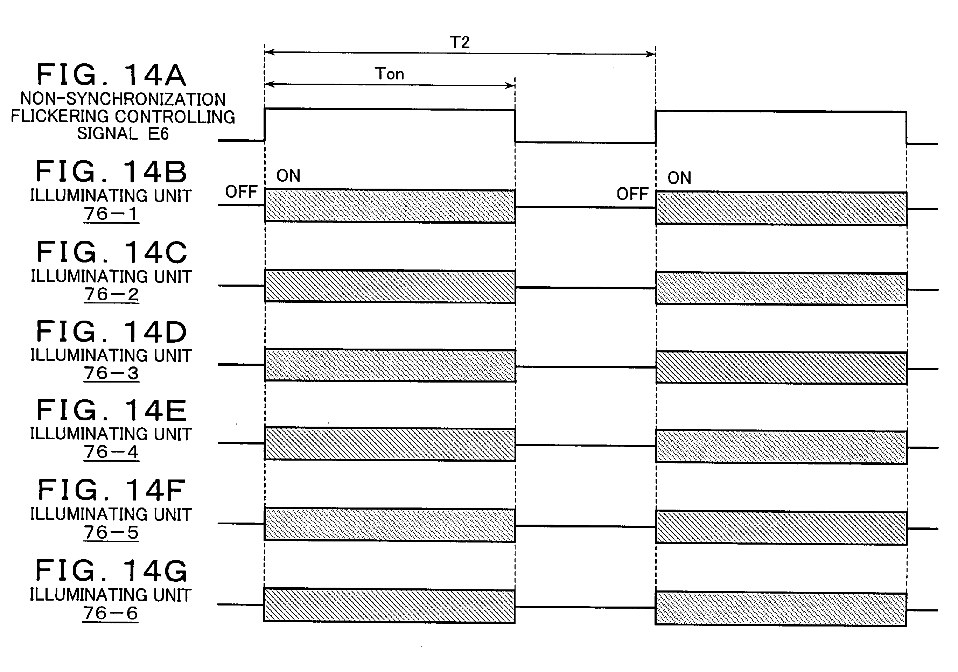

Figs. 14A to Figs. 14G show time charts in the non-synchronization mode supporting a static image by the backlight control circuit shown in Figs. 10A and 10B.

## DETAILED DESCRIPTION OF THE PREFERRED EMBODIMENTS

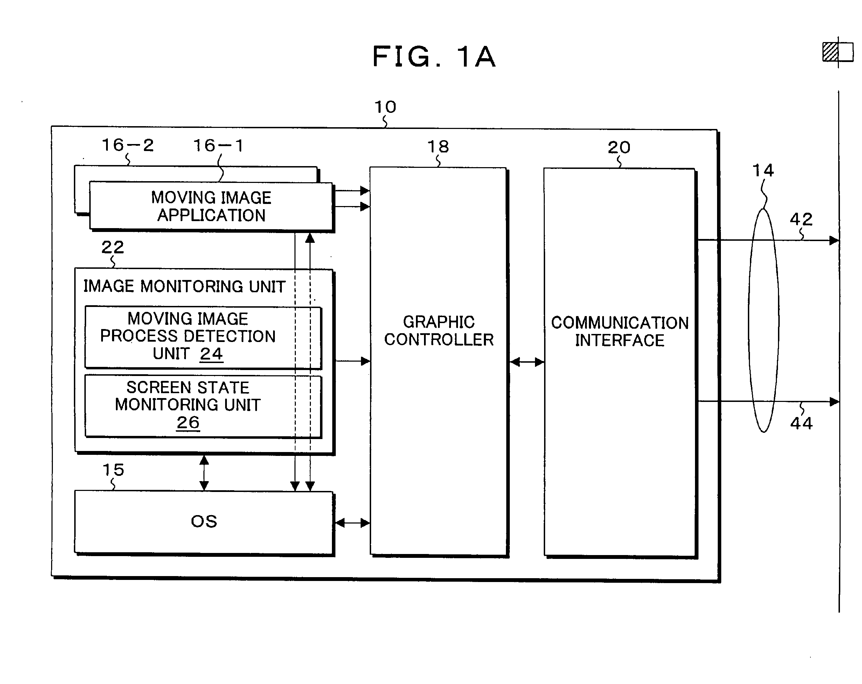

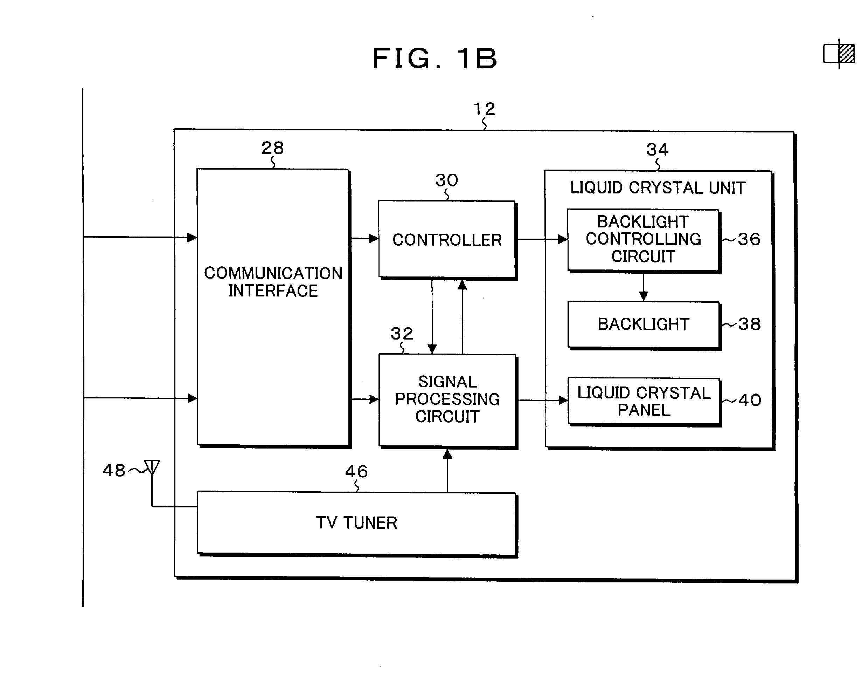

Figs. 1A and 1B are block diagrams of the functional constitution being an embodiment of an image display apparatus according to the invention. In Figs. 1A and 1B, The image display apparatus of the invention comprises a personal computer 10 and a display apparatus 12. The display apparatus 12 is connected with the personal computer 10 by a display connecting cable 14. The constitution of the personal computer 10 and the display apparatus 12 may certainly be a desk-top type in which each of them are connected by a cable as an individual apparatus, and a note-book type in which the main body and a display are integrated. An OS 15, a graphic controller 18 and a communication interface 20 are provided to the personal computer 10. One (1) or more moving image application(s) is/are executed by the OS 15. In this example, a state is shown, in which two (2) applications 16-1 and 16-2 are being run. Moving image information obtained by a moving image process by moving image applications 16-1 and 16-2 is converted into a moving image screen in field units or frame units by the graphic controller 18 and is sent to and displayed on the display apparatus 12 as each of the analogue signals for RGB through a communication interface 20. The display apparatus 12 comprises a communication interface 28, a controller 30, a signal processing circuit 32, an LC unit 34 and a TV tuner 46 connected with an antenna 48. Abacklight control circuit 36, a backlight 38 and an LC panel 40 are provided to the LC unit 34. The backlight control circuit 36 is integrated with a control unit and an inverter power source and drives to illuminate the backlight 38. In the LC unit 34 used in the invention, the backlight 38 is adapted to be able to be controlled to be switched between the synchronization mode supporting a moving image and non-synchronization mode supporting a static image by the backlight control circuit 36 with a control signal from the controller 30. The brightness of the backlight 38 is adjusted by PWM (Pulse Width Modulation) that varies the on-frequency (on duty) in the flashing control of the backlight. The signal processing circuit 32 A/D converts and causes the LC panel 4 to display the RGB signals from the personal computer 10 or the TV tuner 46. The TV tuner 46 comprises a remote control receiving unit and executes control of the intensity of the screen in addition to channel switching and volume adjustment to the controller 30 by receiving a signal from a handy-type TV controller (remote controller) (not shown).

The display connecting cable 14 connecting the communication interface 20 of the personal computer 10 and the communication interface 28 of the display apparatus 12 transmits a di splay control signal 42 and an RGB signal 44. A backlight control signal is contained in the display control signal 42. In this embodiment, as the display control signal 42, a command set according to DDC-2bi standard in VESA (Video Electronics StandardsAssociation) standard on a DDC line contained in a VGA (Video Graphics Array) for an RGB signal 44 is used as the backlight control signal. Here, the command set according to the DDC-2bi standard can control and switch the operation of the backlight 38 provided to the display apparatus, between the synchronization mode supporting a moving image for flashing the backlight being synchronized with the switching of image fields or frames, and the non-synchronization mode supporting a static image for flashing the backlight being not synchronized with the frame switching and at a cycle shorter than the frame cycle. More specifically, the operation of the backlight 38 in the synchronization mode is instructed by a command set having a hexadecimal operation code DDh for the scan backlight on, and the non-synchronization mode is instructed by a command set having a hexadecimal operation code DEh of scan backlight off. For a personal computer 10 having a display apparatus 12 capable of switching the operation of the backlight 38 between the synchronization mode and the non-synchronization mode by such an external signal, in the invention, an image monitoring unit 22 for operating as a resident program for executing image moni toring for the moving image applications 16-1 and 16-2 is provided. The image monitoring unit 22 comprises the moving image process detecting unit 24 and the screen state monitoring unit 26. The moving image process detecting unit 24 detects the moving image applications 16-1 and 16-2 for causing the display apparatus 12 to display a moving image among processes being executed by the OS 16. The screen state monitoring unit 26 instructs the synchronization mode or the non-synchronization mode of the backlight 38 to the display apparatus 12 in response to the display screen state of the moving image applications 16-1 and 16-2 detected by the moving image process detecting unit 24. That is, a screen state monitoring unit 26 has the window of the moving image application currently being run as the foreground screen and, when it detects that the window size has been maximized, it instructs the synchronization mode of the backlight 38 to the display apparatus 12. On the other hand, it instructs the synchronization mode of the backlight 38 to the display apparatus 12.

While the backlight 38 is in the synchronization mode, when it is detected that the window size of the moving image application currently being run has been changed from the maximal size or the window has been retreated from the foreground screen, switching of the operating mode of the backlight 38 to the non-synchronization mode is instructed to the display apparatus 12. Here, the detection of the window size and the position of the window on the screen by the screen state monitoring unit 26 can be notified through the application interface (hereinafter, referred to as "API") of the OS 15. The coordinate of the window frame of the moving image obtained from the OS 15 through the API are compared with the coordinate of the display of the displayed size and, when both coordinates coincide to each other, it can be detected that the window size of the moving image has been maximized. Similarly, the position of the window on the screen can be detected and determined whether it is at foreground or not by obtaining through the API of the OS 15 information on the positions on the screen.

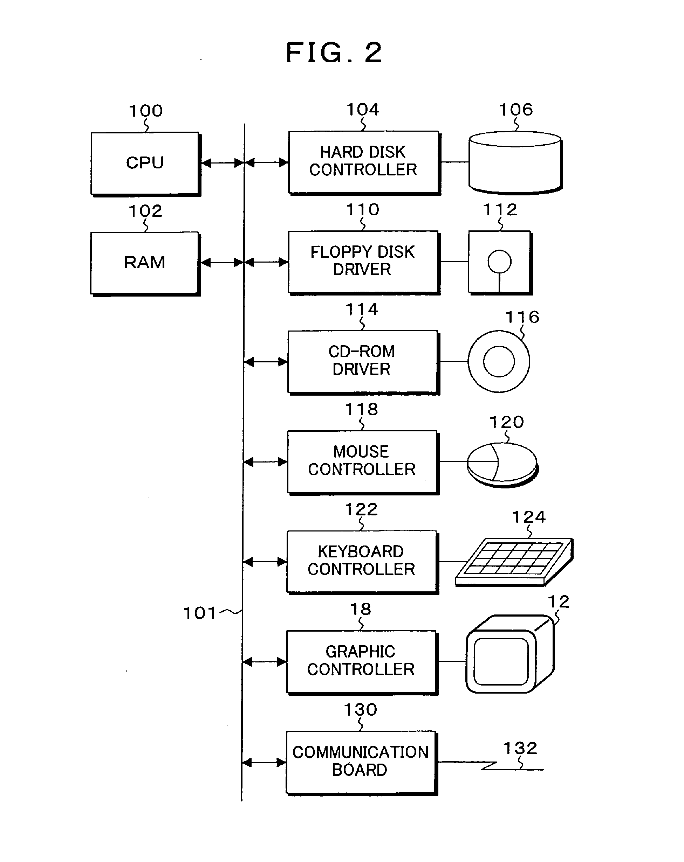

The personal computer 10 can be realized by, for example, the hardware resource of a computer as shown in Fig. 2. In a computer shown in Fig. 2, an RAM 102, a hard disk controller (software) 104, a floppy disk driver (software) 110, a CD-ROM driver (software) 114, a mouse controller 118, a keyboard controller 122, a graphic controller 18 and a communication board 130 are connected to a bus 101 of a CPU 100. The hard disk controller 104 connects the hard disk drive 106 and is loaded with the program for executing the image monitoring process of the invention and, when the computer is started up, calls the necessary programs from the hard disk drive 106, develops them on the RAM 102 and execute them using the CPU 100. The floppy disk driver 110 is connected with a floppy disk drive (hardware) 112 and can read/write to a floppy disk (R). The CD-ROM driver 114 is connected with the CD drive (hardware) 116 and can read data stored in a CD, or programs. The mouse controller 118 transmits the input operation of the mouse 120 to the CPU 100. The keyboard controller 122 transmits the input operation of the keyboard 124 to the CPU 100.

The graphic controller 18 executes displaying to the display apparatus 12. The communication board 130 communicates between apparatuses within the network and external apparatuses on the Internet by using a communication line 132 containing radio communication.

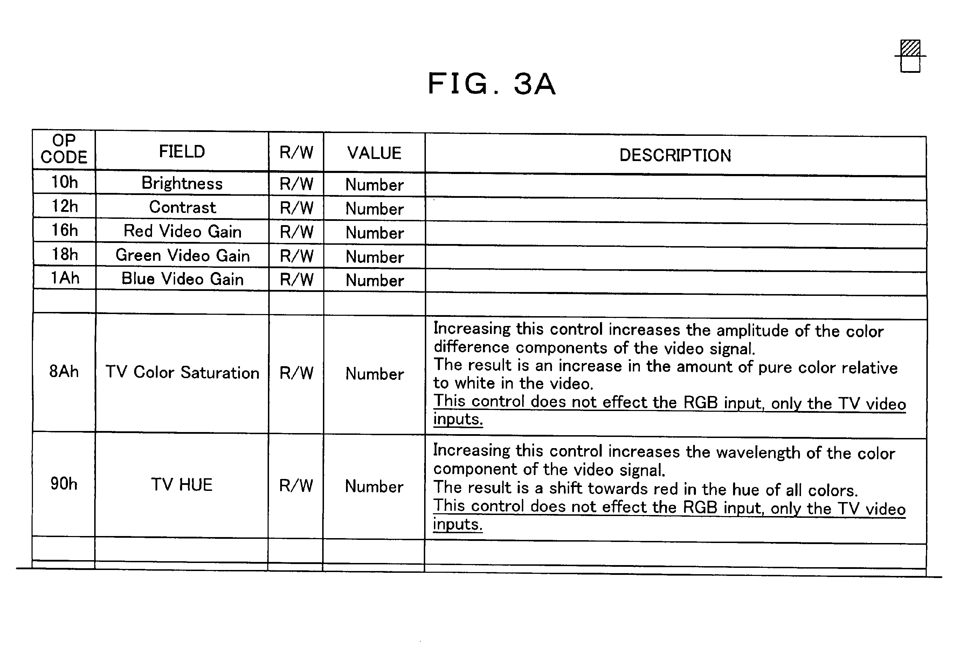

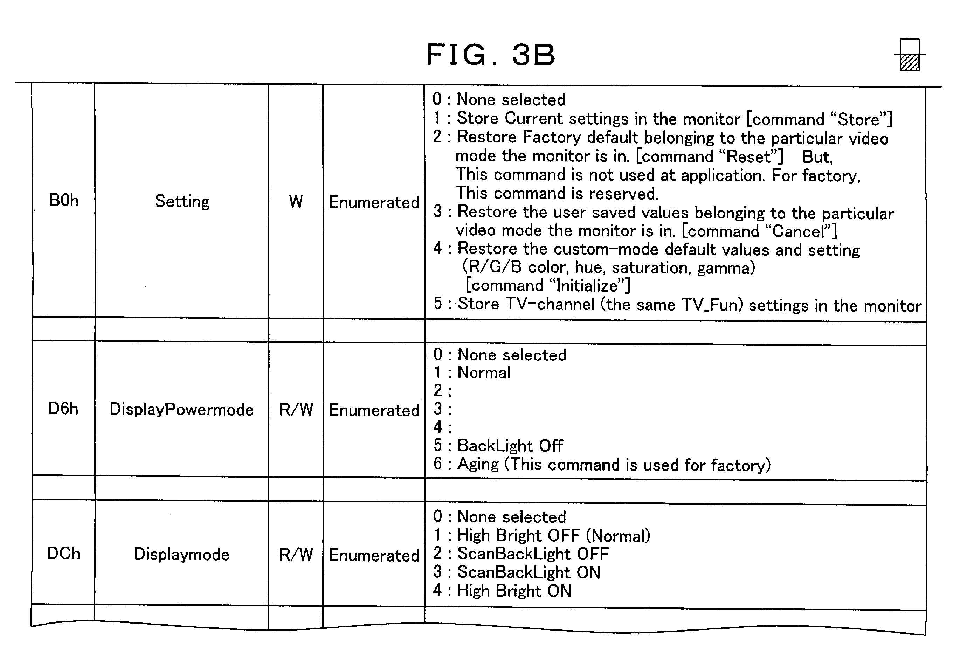

Figs. 3A and 3B illustrate command sets according to 2Bi standard provided under VESA standard used as backlight control signals of the invention. These command sets contains operation codes, fields, read/write flags and values. A command set of display modes with an operation code denoted as "DCh" is used as the backlight control signal of the invention. These command sets takes values of 0 to 4 as the values as shown in the note column. Value 1 indicates DCh and Value 2, Value 3 and Value 4 respectively indicate DDh, DEh and DFh. Among these, the contents of the operation codes, DDh and DEh are:

    2: scan backlight off, and
    3: scan backlight on, and

the former instructs turning-off of the synchronization mode of the backlight, i.e., the non-synchronization mode, and the latter instructs turning-on of the synchronization mode of the backlight. That is, when the screen state monitoring unit 26 provided to the image monitoring unit 22 shown in Figs. 1A and 1B determines that the window is maximized and the window is at the foreground position as to, for example, the moving image applications 16-1 and 16-2 being run by the OS 15, the screen state monitoring unit 26 instructs the synchronization mode of the backlight to the graphic controller 18. Receiving this instruction, the communication interface 20 transmits a command set having the contents of "scan backlight on" of the operation code DEh according to the command set according to 2Bi standard shown in Figs. 3A and 3B as a backlight control signal in the display control signal 42. Receiving this command set, the controller 30 of the display apparatus 12 causes the backlight to flash being synchronized with the frame cycle of the image using on/off control of the backlight control circuit 36 provided to the LC unit 34, executes lighting of the LC panel supporting moving images. On the other hand, when the screen state monitoring unit 26 provided to the image monitoring unit 22 of the personal computer 10 has detected that the window is shrunk or moved to be a screen behind for the moving image application 16-1 for which the backlight 38 is currently in the synchronization mode, since a static image is displayed on the LC panel 40 of the display apparatus 12 at this moment, the screen state monitoring unit 26 instructs the graphic controller 18 to switch to the non-synchronization mode. Receiving this instruction, the communication interface 20 transmits a command set instructing "scan backlight off" of the operation code DDh shown in Figs. 3A and 3B to the display apparatus 12 as a display control signal 42. In this case, the controller 30 of the display apparatus 12 causes the backlight 38 to flash being not synchronized with the frame cycle and at a cycle shorter than the frame cycle using the inverter 36 of the LC unit 34, and executes lighting of the LC panel supporting static images.

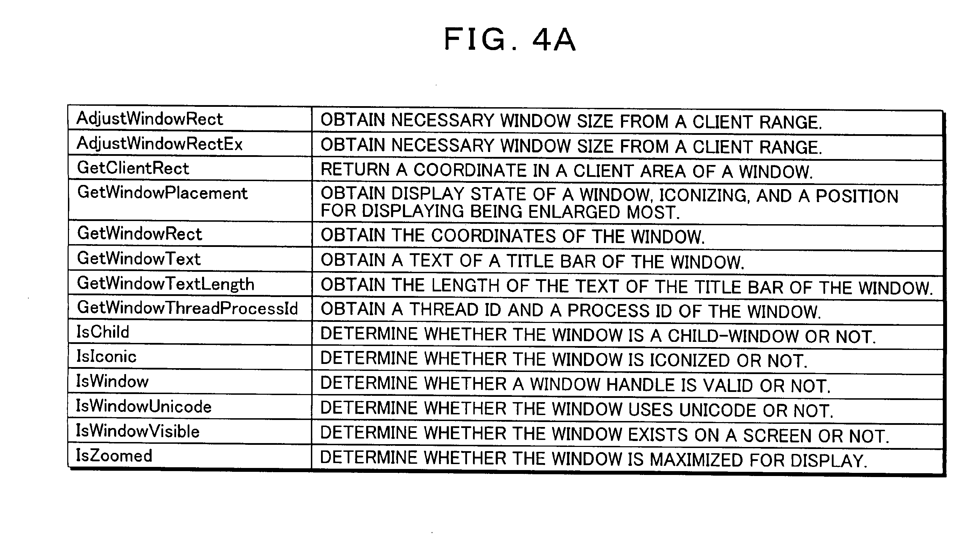

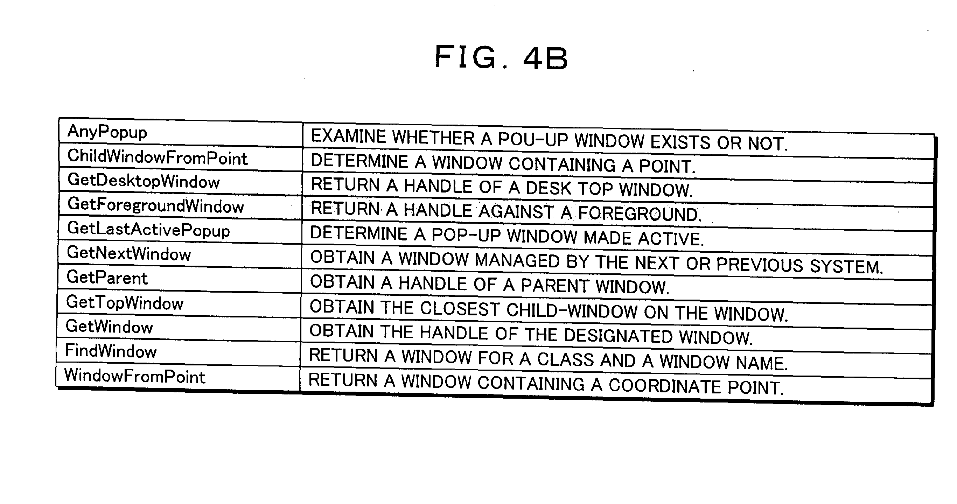

Fig. 4A and Fig. 4B show a list of commands for obtaining information relating to the window through the API of the OS 15 in the s creen state monitoring unit 26 shown in Figs. 1A and 1B. Fig. 4Ais a listof commands for retrieving window information for the API and it is possible to obtain the coordinates of a moving image by a command "GetWindowRect" contained in the list. Fig. 4B is a list of the commands for retrieving windows and positions of widows can be detected by returning the handle for the foreground window by a command "GetForegroundWindow" contained in the list. Certainly, detection of the maximization relating to the moving image screen currently being run and detection of the foreground window can be executed using proper information that can be obtained by referring of the OS 15.

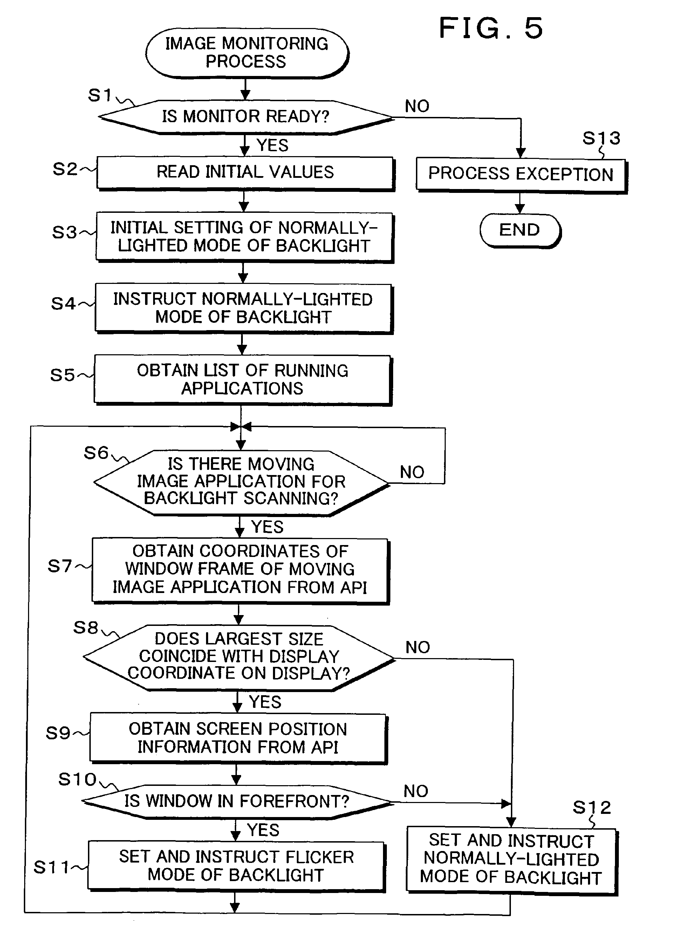

Fig. 5 is a flowchart of a image monitoring process executed by the image monitoring unit 22 provided to the personal computer 10 shown in Figs. 1A and 1B and this flowchart at the same time shows the contents of the process of the image monitoring program operating as a resident program. In Fig. 5, when the OS 15 of the personal computer 10 has been started up, the image monitoring unit 22 installed as a resident program is executed and whether the monitor is ready or not is checked in Step S1. Whether the monitor is ready or not can be determined by checking the device status from the display apparatus 12. When it has been determined that the monitor is ready in Step S1, the process advances to Step S2. On the other hand, when the result "monitor ready" can not be obtained, the process advances to Step S13 and the process is finished after an exception process has been executed. When the result "monitor ready" has been ready and the process has advanced to Step S2, a read-in process of the initial values containing operation modes of the backlight is executed and the non-synchronization mode of the backlight is initially set in Step S3. Then, in Step S4, the non-synchronization mode of the backlight is instructed to the display apparatus 12. Next, in Step S5, a list of applications being currently run is obtained through the API from the OS 15. Then, in Step S6, whether there is a moving image application to be the target for operating the backlight among the applications being currently run for which a list has been obtained is checked. When there is a moving image application, the process advances to S7 and the coordinates of the window frame of the moving image application is obtained from the OS 15 through API. Then, in Step S8, the obtained coordinates of the window frame and the coordinates of the display displayed are compared with each other to check whether the maximized size coincides with the display size or not. When the size is the maximized size, the process advances to Step S9 and the position of the screen of the same moving image application, i.e., information relating to the window position in terms of front or behind is obtained from the OS 15 through the API. Then, in Step S10, whether the window is the foreground screen or not is checked. When it is the foreground screen, in Step S11, the synchronization mode of the backlight is set and instructed to the display apparatus 12. After instructing the synchronization mode of the backlight in Step S11, the process returns to Step S6 and the steps are repeated from S6. In this state, when the moving image application currently being run is stopped, another application is started up and its window is placed as the foreground screen or, furthermore, a static image window is placed as the foreground screen for an application other than the moving image application, the state of the screens is checked in Step S8 or Step S10 and the process advances to Step S12 where the non-synchronization mode of the backlight is set and switching to this mode is instructed to the display apparatus 12 . That is, when the moving image screen is shrunk or stopped and it is not the maximized size any more in Step S8 or when the moving image window is not the foreground screen any more in Step S10, switching to the non-synchronization mode of the backlight is instructed in Step S12. As described above, in the image monitoring process of the invention, when a moving image is displayed as the foreground screen on the display apparatus 12, the backlight is automatically switched to the synchronization mode, and reduction of the impression of the afterimage felt when a moving image is reproduced can be facilitated. On the other hand, when a moving image is stopped or when a moving image is placed as a screen behind and a static screen is placed as a foreground screen, the backlight mode is automatically switched to the non-synchronization mode and, thereby, the flickering of the screen appearing in the state where a static image is displayed can be reduced. With such an optimal operation mode of the backlight supporting a moving image and a static image, a user can unintentionally always obtain the optimal control state of the backlight operation mode.

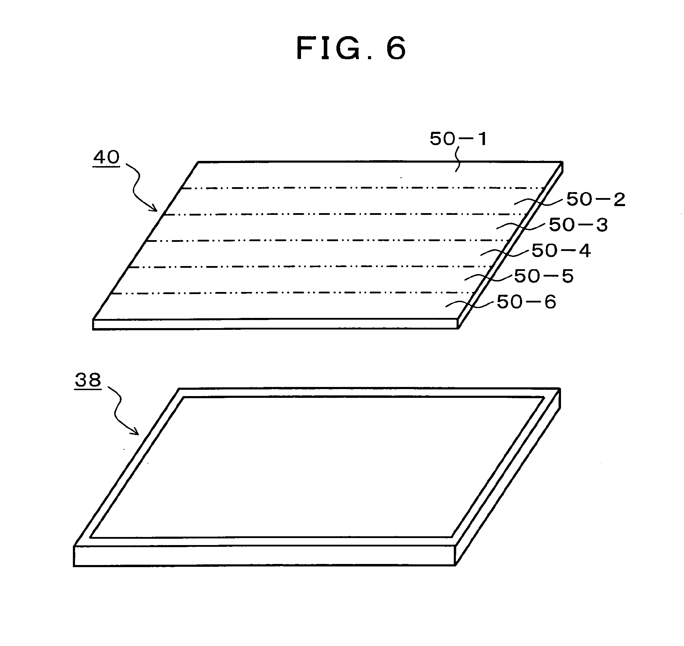

Fig. 6 is an exploded view of the display apparatus to which the display control apparatus of the invention can be applied. In Fig. 6, the LC display apparatus 12 comprises an LC panel 40 and the backlight 38 arranged immediately under the LC panel 40. The LC panel 40 is divided into six (6) divideddisplay areas 50-1 to 50-6 in the vertical direction in this embodiment. An image is redrawn on the divided display areas 50-1 to 50-6 one after another from the divided display area 50-1 to the divided display area 50-6 for each frame cycle of the image for the LC panel 40.

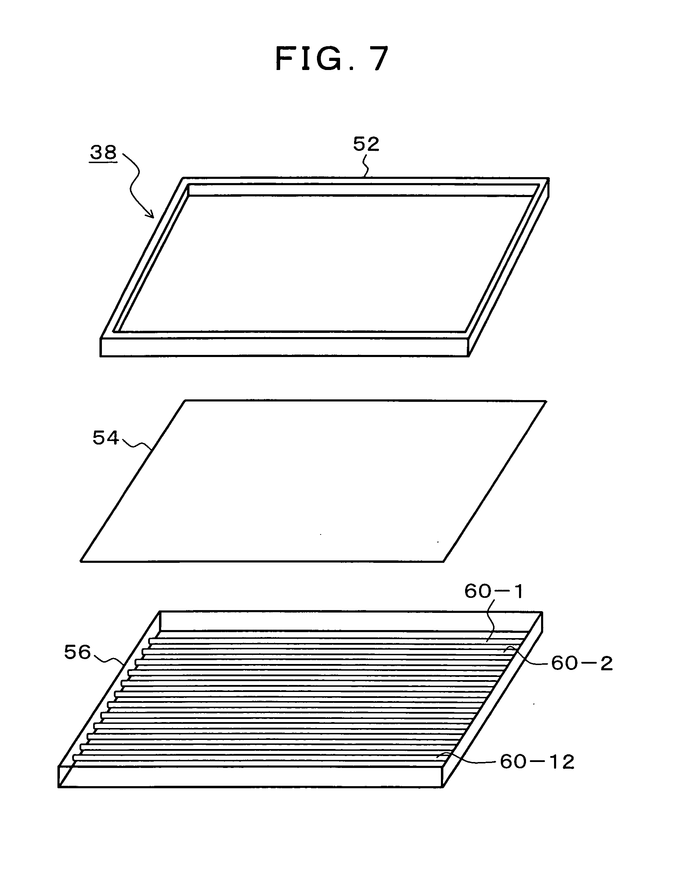

Fig. 7 is an exploded view of the backlight 38 shown in Fig. 6. The backlight 38 comprises a frame 52, a diffusion board 54 and a main body 56. At the position immediately under the LC panel of the main body 56, in this embodiment, twelve (12) cold cathode tubes 60-1 to 60-12 are arranged lined in the vertical direction.

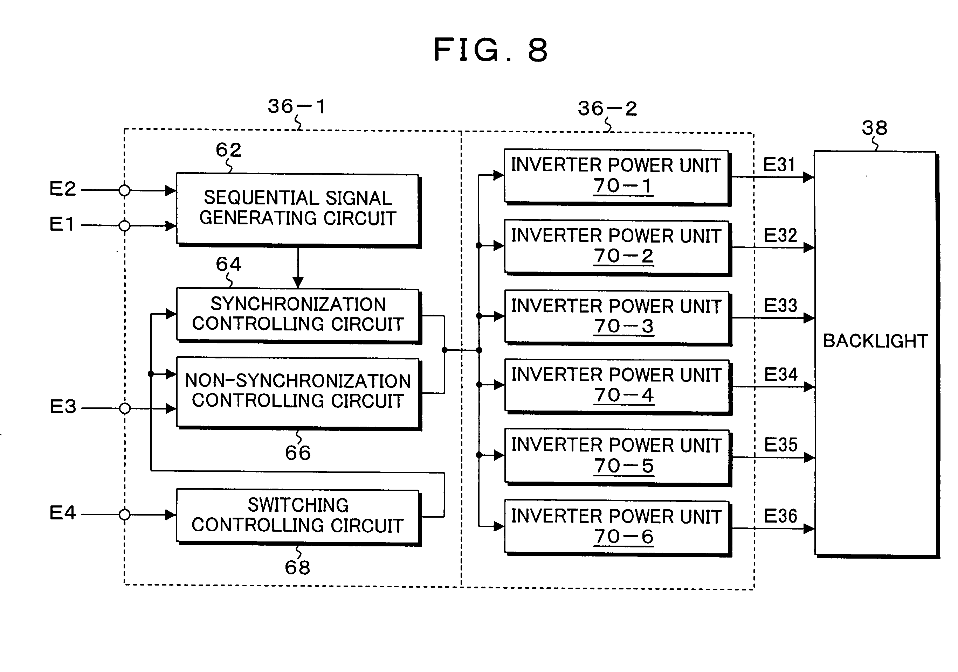

Fig. 8 is a block diagram of the backlight control circuit 36 provided to the display apparatus 12 shown in Figs. 1A and 1B. The backlight control circuit 36 comprises a control unit 36-1 and a driving unit 36-2. A sequential signal generation circuit 62, a synchronization control circuit 64, a non-synchronization control circuit 66 and a switching control circuit 68 are provided to the control unit 36-1. The sequential signal generation circuit 62 and the synchronization control circuit 64 are operated by switching of the operation mode by the switching control circuit 68. On the other hand, the non-synchronization control circuit 66 operates in the non-synchronization mode supporting a static image by the switching control circuit 68. A sequential redrawing signal E1 generated based on the data enable signal and an intensity control signal E2 are inputted into the sequential signal generation circuit 62 for executing synchronization control supporting a moving image and the sequential signal generation circuit 62 outputs to the synchronization control circuit 64 a redrawing start signal for turning on the backlight in response to redrawing of the divided display areas of the LC panel being redrawn one after another at the frame cycle. The switching control circuit 68 is supplied with a mode switching signal E4 and, according to it, switches between the synchronization mode supporting a moving image and the non-synchronization mode supporting a static image. This mode switching signal E4 is supplied from the side of the personal computer 10 shown in Figs. 1A and 1B through the controller 30. When TV broadcasting is received and displayed from the TV tuner 46, the mode switching signal E4 becomes a switching signal for switching forcibly to the synchronization mode. The driving unit 36-2 is provided with also six (6) inverter power units 70-1 to 70-6 corresponding to the six (6) divided display areas 50-1 to 50-6 of the LC panel 40 shown in Fig. 6 and outputs driving signals E31 to E36 to the backlight 38.

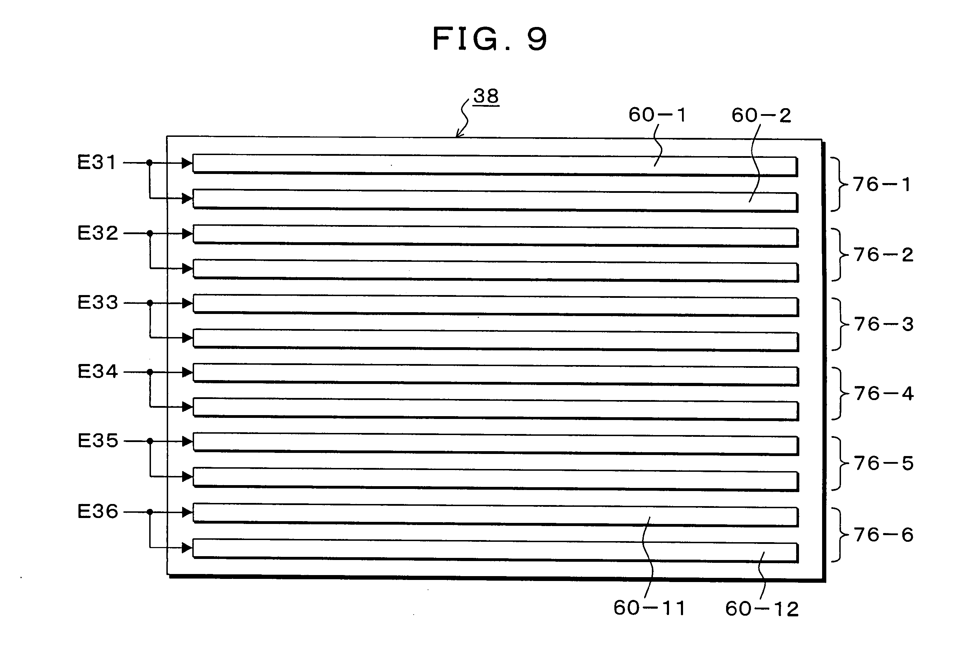

Fig. 9 illustrates the arrangement of the cold cathode tubes 60-1 to 6-12 incorporated in the backlight 38 driven by the driving unit 36-2 shown in Fig. 8. In Fig. 9, the backlight 38 has twelve (12) cold cathode tubes 60-1 to 60-12 placed being arranged in the vertical direction as shown in the exploded view of Fig. 7. The cold cathode tubes 60-1 to 60-12 are supplied with the driving signals E31 to E36 from the inverter power units 70-1 to 70-6 such that the two (2) tubes as a pair is supplied with one (1) signal, and each two tubes are controlled to flash as a unit. Therefore, the backlight 38 is constituted by six (6) illuminating units 76-1 to 76-6, each having two (2) tubes as a unit, as indicated on the right side of them.

Figs. 10A and 10B is circuit block diagrams showing the details of the backlight control circuit shown in Fig. 8. In Figs. 10A and 10B, the sequential signal generation circuit 62, the non-synchronization control circuit 66, the switching control circuit 68 and the inverter power units 70-1 to 70-6 are same as those in an embodiment shown in Fig. 8, however, the detail is shown for the synchronization control circuit unit 64. Corresponding to the illuminating units 76-1 to 76-5 in the backlight shown in Fig. 9, the synchronization control circuit 64 is provided with six (6) triangular wave generation circuits 72-1 to 72-6 and comparators 74-1 to 74-6. The triangular wave generation circuits 72-1 to 72-6 is inputted with redrawing start signals E01 to E06 generated based on the sequential redrawing signal E1 to be inputted into the sequential signal generation circuit 62, and for determining the starting timing of image redrawing corresponding to the divided di splay areas 50-1 to 50-6 of the LC panel 40 shown in Fig. 6. The triangular wave generation circuits 72-1 to 72-6 receives one after another inputting of the redrawing start signals E01 to E06 for each frame cycle and outputs triangular wave signals (saw-tooth signals) E11 to E16 one after another to positive input terminals of the comparators 74-1 to 74-6. Negative input terminals of the comparators 74-1 to 74-6 are inputted commonly with a reference signal E5 from a comparison signal generation circuit 65. The comparison signal generation circuit 65 has a smoothing circuit 65-1 and converts the intensity control signal E2 for the sequential signal generation ci rcuit 62 into a voltage level by smoothing the intensity control signal E2, and outputs the voltage level as the reference signal E5. The intensity control signal E2 is a pulse signal having a certain on-duty for each frame cycle, and the voltage level of the reference signal E5 can be varied by varying the on-duty. The comparators 74-1 to 74-6 compare the triangular wave signal E11 to E16 outputted one after another from the triangular wave generation circuits 72-1 to 72-6 with the reference signal E5 and outputs comparator output signals E21 to E26 to the inverter power unit 70-1 to 70-6. That is, for the comparator 74-1 to 74-6, when the triangular signals E11 to E16 are lower than the reference signal E5, the comparator output signals E21 to E26 are at L level and, when they exceed the reference signal E5, the comparator output signals E21 to E26 are at H level.

Thereby, the inverter power units 70-1 to 70-6 are turned on one after another and the two cold cathode tubes as a unit of the corresponding illuminating units 76-1 to 76-6 of the backlight 38 are turned on one after another.

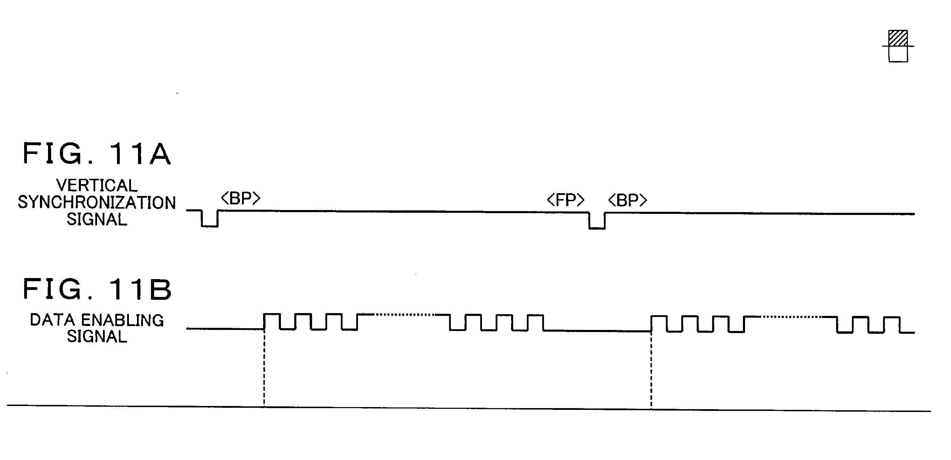

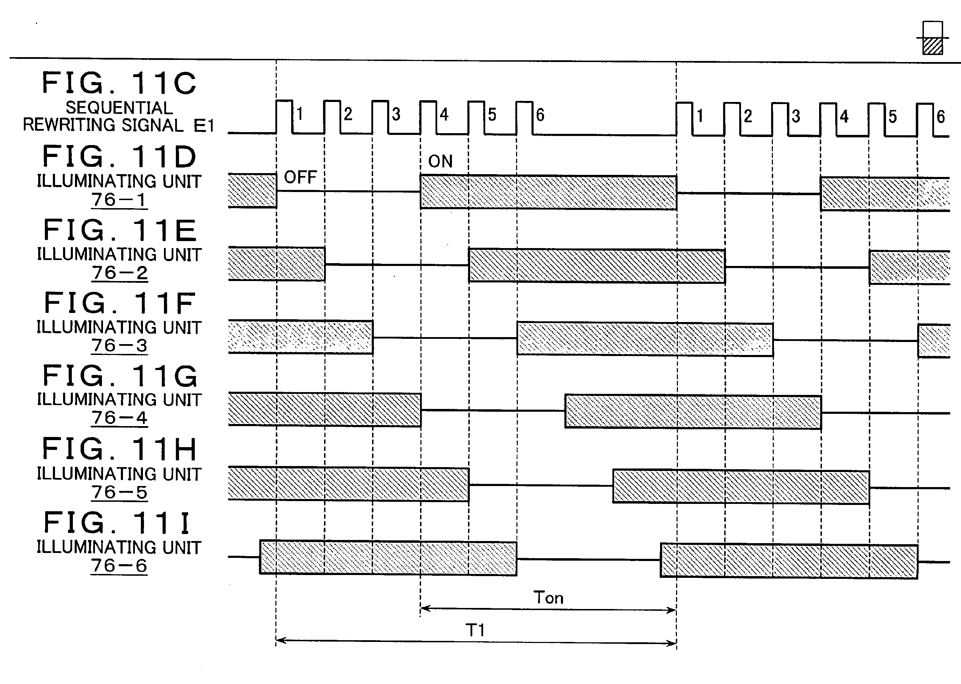

Figs. 11A to Figs. 11J are time charts for the backlight control circuit 36 shown in Figs. 10A and 10B in the synchronization mode supporting a moving image. Figs . 11A shows the vertical synchronization signal and it determines the frame cycle of the image display. The frequency of the vertical synchronization signal is 60Hz . Figs . 11B shows the data enable signal used for transfer of image display data to the LC panel 40. The data enable signal is generated sequentially by the controller 30 somewhat delayed than the vertical synchronization signal and is the reference for drawing in the horizontal scanning liens of the LC panel 40. For example, if the number of the horizontal scanning lines of the LC panel 40 is 768, transfer of image data by one (1) clock of the data enable signal is executed for each one line. Thus, the number of clocks of the data enable signal in one (1) frame is 768. The time period from the rise of the vertical synchronization signal to the moment at which the data enable signal is sent is referred to as "back porch width". The back porch width is determined by a device for sending out the display image data to the display apparatus 12. The back porch width differs according to the resolution and is, for example, 29Th (20.67 μm) in the case of a personal computer having the resolution of XGA. In Figs. 10A and 10B, <BP> denotes the back porch and <FB> denotes a front porch and, as to Fig. 10B, detailed values are listed in Hs being the horizontal synchronization cycle as the unit as an example. Figs. 11C shows a sequential redrawing signal B1 and is generated by dividing the data enable signal to one (1) sixth and is supplied from the controller 30 shown in Figs. 1A and 1B to the backlight control circuit 36. The sequential switching signal E1 outputs six (6) pulse signals denoted by six (6) digits of 1 to 6 corresponding to the six (6) divided display areas 50-1 to 50-6 of the LC panel 40 shown in Fig. 6 within one (1) frame cycle determined by the vertical synchronization signal. Fig 12D to Figs. 11I show the flashing state of turning on and off of the backlighting of the illuminating units 76-1 to 76-6 in the backlight 38 shown in Fig. 9 driven by the driving signals E31 to E36 from the inverter power units 70-1 to 70-6. For example, referring to the illuminating unit 76-1 shown in Figs. 11D, the illuminating unit 76-1 is turned off synchronized with the rise of the first pulse of the sequential redrawing signal E1 and is turned on in the vicinity of the rise of the fourth pulse of the sequential redrawing signal E1 , then, is turned off at the rise of the first pulse in the next frame cycle, then, this process is repeated. Here, the frame cycle is denoted by T1 and the illuminating unit 76-1 is turned off for the first half of the frame cycle T1 and is turned on for the on-time period Ton in the second half. Thus, the on-duty for determining the time period to turn on in a frame cycle of the illuminating unit 76-1 is (Ton/T1) . As will be clarified in the following description, the on-time period Ton in a frame cycle varies in response to the intensity control signal E2 for the comparison signal generation circuit 65. In the embodiment of the invention, the on-duty can be adjusted within a range of 0.1 to 0.9 for turning on the backlight by the intensity control signal E2. The remaining illuminating units 76-2 to 76-6 shown in respectively Figs. 11E, Figs. 11F, Figs. 11G, Figs. 11H and Figs. 11I are synchronized respectively with the rise of the secondpulse, the thirdpulse, the fourth pulse, the fifth pulse and the sixth pulse of the sequential redrawing signal E1 and are turned on respectively at three pulses later, then, are turned off also at the rise of respectively the second pulse, the thirdpulse, the fourth pulse, the fifth pulse and the sixth pulse of the sequential redrawing signal E1 of the next frame cycle

Figs. 12A to Figs. 12G show time charts of the redrawing start signals E01 to E06 generated from the sequential redrawing signal E1 synchronized with the data enable signal. In Figs. 12A to Figs. 12G, the vertical synchronization signal shown in Figs . 12A, the data enable signal shown in Figs . 12B and the sequential redrawing signal E1 shown in Figs. 12D are same as those in the time chart shown in Figs . 11A to Figs . 11I . Furthermore, in Figs. 12C, the intensity control signal E2 is shown and the brightness of the LC panel in the synchronization mode supporting a moving image can be controlled by this on-duty. The sequential signal generation circuit 62 shown in Figs. 10A and 10B inputted with the sequential redrawing signal shown in Figs . 12D outputs one after another the redrawing start signals E01 to E06 synchronizing with the rise of each signal as shown in Figs . 12E to Figs. 12J. This redrawing start signals E01 to E06 are inputted into the triangular wave generation circuit 72-1 to 72-6 provided to the synchronization control circuit 64 shown in Figs. 10A and 10B and the circuits outputs one after another the triangular wave signals E11 to E16 each having a specific slope.

Figs. 13A to Figs. 13G show time charts of a backlight flashing control signal generated based on the redrawing start signal shown in Figs. 12A to Figs. 12G, and take an example of flashing control of the illuminating unit 76-1 by the inverter power unit 70-1 based on the redrawing start signal E01 shown in Figs. 12E. The vertical synchronization signal shown in Figs. 13A, the sequential redrawing signal E1 shown in Figs. 13C and the redrawing start signal E01 shown in Figs. 13D are same as those in Figs. 12A to Figs. 12G. Figs. 13E shows a triangular wave signal E11 outputted from the triangular wave generation circuit 72-1 shown in Figs. 10A and 10B and a reset-start of the triangular wave signal E11 is executed at the timing of the rise of the redrawing start signal E01 and the output level increases along a constant slope. The triangular wave signal E11 is inputted into the positive input terminal of the comparator 74-1 shown in Figs. 10A and 10B while the reference signal E5 having a level obtained by smoothing the intensity control signal E2 at that time is inputted into the comparator 74-1. Therefore, at the timing of a time t1 at which the triangular wave signal E11 reaches the reference signal E5, the comparator output signal E21 is at H level as shown in Figs. 13F and operates the inverter power unit 70-1, then, outputs the driving signal E31 to the backlight 38, then, drives and turns on the two (2) cold cathode tubes 60-1 and 60-2 contained in the illuminating unit 76-1 shown in Fig. 9. The triangular wave signal E11 is reset-started when the redrawing start signal E01 has risen in the next frame cycle and, thereby, the comparator output signal E21 is at L level and the illuminating unit 76-1 is turned off. As to the brightness of the LC panes screen when supporting a moving image, when the on-duty of the intensity control s ignal E2 shown in Figs. 12C is increased, the level of the reference signal E5 shown in Figs. 13E is decreased and the on-time period Ton is extended. Thereby, the brightness of the screen is increased. On the other hand, when the on-duty of the intensity control signal E2 shown in Figs. 12C is decreased, the reference signal E5 shown in Figs. 13E is increased and the on-time period Ton in the illuminating unit is decreased. Thereby, the brightness of the screen is decreased. As is apparent from the time charts shown in Figs. 11A to Figs. 13G, in the control of flashing of the backlight in the synchronization mode supporting a moving image, the backlight is turned on for the first half of a frame cycle synchronizing with the redrawing start signals E01 to E06 based on the sequential redrawing signal E1 obtained by dividing the data enable signal, and by executing control for flashing by which the backlight is turned on for the second half, the backlight is properly synchronized with the image redrawing for the divided display areas 50-1 to 50-6 of the LC panel and the backlight is turned on at the timing for the second half of the frame cycle when the image variation caused by the redrawing has settled. Thereby, afterimages appearing when a moving image is displayed can be reduced and the quality of a moving image can be improved. As to the control for flashing the backlight in the synchronization mode, the flashing is controlled not by the vertical synchronization signal, but by obtaining synchronization using the sequential redrawing signal obtained by dividing the data enable signal for data transfer to the LC panel. Thereby, control of flashing the backlight for preventing afterimages synchronized properly with redrawing of the divided display areas of the LC panel can be executed. Further more, since the control is control for flashing the backlight by synchronization based on the data enable signal, synchronization can be obtained by simply dividing the data enable signal compared to obtaining synchronization against the vertical synchronization signal. Therefore, the constitution of the circuit may be simple.

Figs. 14A to Figs. 14G show time charts of the backlight flashing operation in the non-synchronization mode supporting a static image by the non-synchronization control circuit 66 provided to the backlight control circuit 36 shown in Figs. 10A and 10B. Figs. 14A shows a non-synchronization control signal E6 and synchronization with the vertical synchronization signal for giving frame cycles and data enable signal is not obtained, then, a signal having a constant frequency T2 predetermined based on the clock used in the display apparatus 12 is used. The non-synchronization flashing control signal E6 controls the flashing to repeat that, synchronizing with the on-time period Ton for the first half of a signal cycle T2, it turns on in unison the illuminating units 76-1 to 76-6 as shown in Figs. 14B to Figs. 14G and turns them off in unison for the remaining off-time period. As the frequency of the non-synchronizationflashingcontrolsignal E 6 of the invention, arithmetic mean frequency f2 obtained from a two (2)-fold frequency 3f and a four (4)-fold frequency 4f of the frame frequency is used. Here, since the frame frequency f is f=60Hz, the frequency f2 of the non-synchronization flashing control signal E6 is:

$$f2=(2f+3f)/2=210Hz$$

Using a driving frequency 210Hz of the backlight 38 in the non-synchronization mode while displaying a static image, a stripe pattern occurring in the display screen of the LC panel while displaying a static image and caused by constantly-multiplied frequency of the frame frequency can be suppressed. The frequency f2 of the non-synchronization flashing control signal E6 may generally be an arithmetic mean frequency of a frequency nf and a frequency (n+1) f being respectively the n-fold frequency and the (n+1)-fold frequency of the frame frequency where n is an integer such as 1, 2, 3, 4, 5... and any proper frequency can be selected according to the integer n as f2=150Hz if n=2, f2=270Hz if n=4 and f2=330Hz if n=6. As to the brightness adjustment of the LC panel display screen in the non-synchronization mode shown in Figs. 14, by varying the on-duty of the on-time period Ton, i.e., the on-duty of the non-synchronization flashing control signal E6 using the intensity control signal E3 for the non-synchronization control circuit 66 shown in Figs. 10A and 10B, the brightness while displaying a static image can be adjusted. In the embodiment of the invention, by varying the on-duty of the non-synchronization flashing control signal E6 in a range from 0.25 to 0.98, the screen brightness is adjusted. The backlight flashing control in the synchronization mode supporting a moving image and backlight flashing control in the non-synchronization mode supporting a static image in the display apparatus of the invention shown in Fig. 6 to Figs. 14G can be applied to a proper display apparatus in which an LC panel is the display apparatus, not limiting to the display apparatus 12 used for the personal computer 10 shown in Figs. 1A and 1B. The invention covers proper modifications without impairing the objects and advantages thereof and is not limited to the numerical values shown in the above embodiment.

**Claims**

1. An illumination control apparatus controlling an illumination device that illuminates a display apparatus sequentially redrawing a plurality of divided display areas , the illumination device having a plurality of divided illuminating areas, the illumination control apparatus comprising:

    an illumination control unit for starting control of turning on sequentially the illuminating areas in response to the start of redrawing the display areas.

2. The illumination control apparatus according to claim 1 , wherein an image displayed by the display apparatus is a moving image.

3. The illumination control apparatus according to claim 2, wherein when the image displayed by the display apparatus is not a moving image, the illumination control apparatus provides control of concurrently turning on the plurality of illuminating areas in response to a predetermined frequency.

4. The illumination control apparatus according to claim 1, wherein after settling of variations of images on the plurality of display areas corresponding individually to the illuminating areas, the illumination control apparatus provides control of turning on the illuminating areas.

5. The illumination control apparatus according to claim 1, wherein the brightness of the display apparatus is adjusted by the time for which each illuminating area is turned on.

6. The illumination control apparatus according to claim 1, wherein a sequential redrawing signal to be a criterion for control of turning on each illuminating area is generated from a redrawing signal for the display area.

7. The illumination control apparatus according to claim 6, wherein the illumination control apparatus provides control of, during predetermined variation of the sequential redrawing signal, turning off corresponding illuminating areas and turning on the corresponding illuminating areas after a given time period.

8. A display apparatus including a display unit sequentially redrawing a plurality of divided display areas and an illuminating unit having a plurality of divided illuminating areas and illuminating the display unit, the display apparatus comprising:

   an illumination control unit for starting control of turning on sequentially the illuminating areas in response to the start of redrawing the display areas.

9. The display apparatus according to claim 8, wherein an image displayed is a moving image .

10. The display apparatus according to claim 9, wherein when the image displayed is not a moving image, the plurality of illuminating areas are controlled to concurrently turn on in response to a predetermined frequency.

11. The display apparatus according to claim 8, wherein after settling of variations of images on the plurality of display areas corresponding individually to the illuminating areas, the illuminating areas are controlled to turn on.

12. The display apparatus according to claim 8, wherein the brightness of the display apparatus is adjusted by the time for which each illuminating area is turned on.

13. The display apparatus according to claim 8, wherein a turning-on control signal for each illuminating area is generated from a sequential redrawing signal for the display areas.

14. The display apparatus according to claim 11, wherein control is provided such that, during predetermined variation of the sequential redrawing signal, the corresponding illuminating areas are turned off and are turned on after a given time period.

15. An information apparatus executing a plurality of processes and displaying images through control of a display apparatus, the information apparatus comprising:

   a moving image process detection unit for detecting a moving image process displaying a moving image on the display apparatus from among processes being currently executed; and
   a display control unit for providing the display apparatus with instruction of display control of reducing flickering when the moving image process detection unit detects display of a moving image.

16. The information apparatus according to claim 15, further comprising a screen state monitoring unit for monitoring the state of display of the moving image process, wherein display control unit provides the display apparatus with instruction of display control of reducing flickering when the size of display of the moving image process exceeds a predetermined size.

17. The information apparatus according to claim 15, wherein the display control unit provides the display apparatus with instruction of display control reducing flickering when the size of display of the moving image process is equal to the size of the display areas of the display apparatus.

18. The information apparatus according to claim 15, wherein the instruction of display control is issued in conformity to DDC-2bi standard provided under VESA standard.

19. An information control apparatus executing a plurality of processes and controlling a display apparatus for displaying images, the information control apparatus comprising:

   a moving image process detection unit for detecting a moving image process displaying a moving image on the display apparatus from among processes being currently executed; and
   a display control unit for providing the display apparatus with instruction of display control of reducing flickering when the moving image process detection unit detects display of a moving image.

20. The information control apparatus according to claim 19, further comprising a screen state monitoring unit for monitoring the state of display of the moving image process, wherein the display control unit provides the display apparatus with instruction of display control of reducing flickering when the size of display of the moving image process exceeds a predetermined size.

21. The information control apparatus according to claim 19, wherein the display control unit provides the display apparatus with instruction of display control of reducing flickering when the size of display of the moving image process is equal to the size of the display areas of the display apparatus.

22. The information control apparatus according to claim 19, wherein instruction of display control is issued in conformity to DDC-2bi standard provided under VESA standard.

23. A display control program for causing a computer to run:

a moving image process detection step for detecting a moving image process displaying a moving image on a display apparatus from among processes being currently executed; and
a display control step for providing the display apparatus with instruction of display control of reducing flickering when display of a moving image is detected at the moving image process detection step.

24. The display control program according to claim 23, further causing the computer to run a screen state monitoring step for monitoring the state of display of the moving image process, wherein the display control step includes providing the display apparatus with instruction of display control of reducing flickering when the size of display of the moving image process exceeds a predetermined size.

25. The display control program according to claim 23, wherein the display control step includes providing the display apparatus with instruction of display control of reducing flickering when the size of display of the moving image process is equal to the size of the display areas of the display apparatus.

26. The display control program according to claim 23, wherein instruction of display control is issued in conformity to DDC-2bi standard provided under VESA standard.

# FIG. 1A

EP 1 551 002 A2

# FIG. 1B

EP 1 551 002 A2

# FIG. 2

# FIG. 3A

| OP CODE | FIELD | R/W | VALUE | DESCRIPTION |
|---|---|---|---|---|
| 10h | Brightness | R/W | Number | |
| 12h | Contrast | R/W | Number | |
| 16h | Red Video Gain | R/W | Number | |
| 18h | Green Video Gain | R/W | Number | |
| 1Ah | Blue Video Gain | R/W | Number | |
| | | | | |
| 8Ah | TV Color Saturation | R/W | Number | Increasing this control increases the amplitude of the color difference components of the video signal. The result is an increase in the amount of pure color relative to white in the video. This control does not effect the RGB input, only the TV video inputs. |
| 90h | TV HUE | R/W | Number | Increasing this control increases the wavelength of the color component of the video signal. The result is a shift towards red in the hue of all colors. This control does not effect the RGB input, only the TV video inputs. |
| | | | | |

EP 1 551 002 A2

# FIG. 3B

| | | | | |
|---|---|---|---|---|
| B0h | Setting | W | Enumerated | 0 : None selected<br>1 : Store Current settings in the monitor [command "Store"]<br>2 : Restore Factory default belonging to the particular video<br>    mode the monitor is in. [command "Reset"]  But,<br>    This command is not used at application. For factory,<br>    This command is reserved.<br>3 : Restore the user saved values belonging to the particular<br>    video mode the monitor is in. [command "Cancel"]<br>4 : Restore the custom-mode default values and setting<br>    (R/G/B color, hue, saturation, gamma)<br>    [command "Initialize"]<br>5 : Store TV-channel (the same TV_Fun) settings in the monitor |
| D6h | DisplayPowermode | R/W | Enumerated | 0 : None selected<br>1 : Normal<br>2 :<br>3 :<br>4 :<br>5 : BackLight Off<br>6 : Aging (This command is used for factory) |
| DCh | Displaymode | R/W | Enumerated | 0 : None selected<br>1 : High Bright OFF (Normal)<br>2 : ScanBackLight OFF<br>3 : ScanBackLight ON<br>4 : High Bright ON |

EP 1 551 002 A2

# FIG. 4A

| | |
|---|---|
| AdjustWindowRect | OBTAIN NECESSARY WINDOW SIZE FROM A CLIENT RANGE. |
| AdjustWindowRectEx | OBTAIN NECESSARY WINDOW SIZE FROM A CLIENT RANGE. |
| GetClientRect | RETURN A COORDINATE IN A CLIENT AREA OF A WINDOW. |
| GetWindowPlacement | OBTAIN DISPLAY STATE OF A WINDOW, ICONIZING, AND A POSITION FOR DISPLAYING BEING ENLARGED MOST. |
| GetWindowRect | OBTAIN THE COORDINATES OF THE WINDOW. |
| GetWindowText | OBTAIN A TEXT OF A TITLE BAR OF THE WINDOW. |
| GetWindowTextLength | OBTAIN THE LENGTH OF THE TEXT OF THE TITLE BAR OF THE WINDOW. |
| GetWindowThreadProcessId | OBTAIN A THREAD ID AND A PROCESS ID OF THE WINDOW. |
| IsChild | DETERMINE WHETHER THE WINDOW IS A CHILD-WINDOW OR NOT. |
| IsIconic | DETERMINE WHETHER THE WINDOW IS ICONIZED OR NOT. |
| IsWindow | DETERMINE WHETHER A WINDOW HANDLE IS VALID OR NOT. |
| IsWindowUnicode | DETERMINE WHETHER THE WINDOW USES UNICODE OR NOT. |
| IsWindowVisible | DETERMINE WHETHER THE WINDOW EXISTS ON A SCREEN OR NOT. |
| IsZoomed | DETERMINE WHETHER THE WINDOW IS MAXIMIZED FOR DISPLAY. |

# FIG. 4B

| AnyPopup | EXAMINE WHETHER A POU-UP WINDOW EXISTS OR NOT. |
|---|---|
| ChildWindowFromPoint | DETERMINE A WINDOW CONTAINING A POINT. |
| GetDesktopWindow | RETURN A HANDLE OF A DESK TOP WINDOW. |
| GetForegroundWindow | RETURN A HANDLE AGAINST A FOREGROUND. |
| GetLastActivePopup | DETERMINE A POP-UP WINDOW MADE ACTIVE. |
| GetNextWindow | OBTAIN A WINDOW MANAGED BY THE NEXT OR PREVIOUS SYSTEM. |
| GetParent | OBTAIN A HANDLE OF A PARENT WINDOW. |
| GetTopWindow | OBTAIN THE CLOSEST CHILD-WINDOW ON THE WINDOW. |
| GetWindow | OBTAIN THE HANDLE OF THE DESIGNATED WINDOW. |
| FindWindow | RETURN A WINDOW FOR A CLASS AND A WINDOW NAME. |
| WindowFromPoint | RETURN A WINDOW CONTAINING A COORDINATE POINT. |

EP 1 551 002 A2

# FIG. 5

IMAGE MONITORING
PROCESS

S1 — IS MONITOR READY? — NO

YES

S2 — READ INITIAL VALUES

S3 — INITIAL SETTING OF NORMALLY-LIGHTED MODE OF BACKLIGHT

S4 — INSTRUCT NORMALLY-LIGHTED MODE OF BACKLIGHT

S5 — OBTAIN LIST OF RUNNING APPLICATIONS

S6 — IS THERE MOVING IMAGE APPLICATION FOR BACKLIGHT SCANNING? — NO

YES

S7 — OBTAIN COORDINATES OF WINDOW FRAME OF MOVING IMAGE APPLICATION FROM API

S8 — DOES LARGEST SIZE COINCIDE WITH DISPLAY COORDINATE ON DISPLAY? — NO

YES

S9 — OBTAIN SCREEN POSITION INFORMATION FROM API

S10 — IS WINDOW IN FOREFRONT? — NO

YES

S11 — SET AND INSTRUCT FLICKER MODE OF BACKLIGHT

S13 — PROCESS EXCEPTION

END

S12 — SET AND INSTRUCT NORMALLY-LIGHTED MODE OF BACKLIGHT

# FIG. 6

# FIG. 7

# FIG. 8

```
                    36-1                                    36-2              38

               ┌─────────62─────────┐          ┌──INVERTER POWER UNIT──┐  E31  ┌──────────┐
      E2  ──○──▶│                    │      ──▶ │        70-1           │──────▶│          │
               │ SEQUENTIAL SIGNAL  │          └───────────────────────┘       │          │
      E1  ──○──▶│ GENERATING CIRCUIT │          ┌──INVERTER POWER UNIT──┐  E32  │          │
               └─────────┬──────────┘      ──▶ │        70-2           │──────▶│          │
                     64  │                      └───────────────────────┘       │          │
               ┌─────────▼──────────┐          ┌──INVERTER POWER UNIT──┐  E33  │          │
            ──▶│ SYNCHRONIZATION    │      ──▶ │        70-3           │──────▶│ BACKLIGHT │
               │ CONTROLLING CIRCUIT│          └───────────────────────┘       │          │
               └────────────────────┘          ┌──INVERTER POWER UNIT──┐  E34  │          │
               ┌────────────────────┐      ──▶ │        70-4           │──────▶│          │
            ──▶│ NON-SYNCHRONIZATION│          └───────────────────────┘       │          │
      E3  ──○─▶│ CONTROLLING CIRCUIT│          ┌──INVERTER POWER UNIT──┐  E35  │          │
               └────────────────────┘      ──▶ │        70-5           │──────▶│          │
                         66                     └───────────────────────┘       │          │
               ┌────────────────────┐          ┌──INVERTER POWER UNIT──┐  E36  │          │
      E4  ──○─▶│ SWITCHING          │      ──▶ │        70-6           │──────▶│          │
               │ CONTROLLING CIRCUIT│          └───────────────────────┘       └──────────┘
               └────────────────────┘
                         68
```

EP 1 551 002 A2

# FIG. 9

EP 1 551 002 A2

# FIG. 10A

EP 1 551 002 A2

FIG. 10B

EP 1 551 002 A2

# FIG. 11A

VERTICAL
SYNCHRONIZATION
SIGNAL

⟨BP⟩          ⟨FP⟩  ⟨BP⟩

# FIG. 11B

DATA ENABLING
SIGNAL

EP 1 551 002 A2

FIG. 11C
SEQUENTIAL
REWRITING SIGNAL E1

FIG. 11D
ILLUMINATING UNIT
76-1

FIG. 11E
ILLUMINATING UNIT
76-2

FIG. 11F
ILLUMINATING UNIT
76-3

FIG. 11G
ILLUMINATING UNIT
76-4

FIG. 11H
ILLUMINATING UNIT
76-5

FIG. 11I
ILLUMINATING UNIT
76-6

OFF

ON

Ton

T1

EP 1 551 002 A2

# FIG. 12A
VERTICAL
SYNCHRONIZATION
SIGNAL

# FIG. 12B
DATA ENABLING
SIGNAL

# FIG. 12C
INTENSITY
CONTROLLING
SIGNAL E2

FIG. 12D
SEQUENTIAL
REWRITING SIGNAL E1

FIG. 12E
REWRITING STARTING
SIGNAL E01

FIG. 12F
REWRITING STARTING
SIGNAL E02

FIG. 12G
REWRITING STARTING
SIGNAL E03

FIG. 12H
REWRITING STARTING
SIGNAL E04

FIG. 12I
REWRITING STARTING
SIGNAL E05

FIG. 12J
REWRITING STARTING
SIGNAL E06

EP 1 551 002 A2

# FIG. 13A
VERTICAL SYNCHRONIZATION SIGNAL

# FIG. 13B
DATA ENABLING SIGNAL

# FIG. 13C
SEQUENTIAL REWRITING SIGNAL E1

1  2  3  4  5  6          1  2  3  4  5  6

# FIG. 13D
REWRITING STARTING SIGNAL E01

# FIG. 13E
TRIANGULAR SIGNAL E11

+

E5

# FIG. 13F
COMPARATOR OUTPUT SIGNAL E21

# FIG. 13G
ILLUMINATING UNIT 76-1

OFF

ON

Ton

T1

EP 1 551 002 A2

FIG. 14A
NON-SYNCHRONIZATION
FLICKERING CONTROLLING
SIGNAL E6

FIG. 14B
ILLUMINATING UNIT
76-1

FIG. 14C
ILLUMINATING UNIT
76-2

FIG. 14D
ILLUMINATING UNIT
76-3

FIG. 14E
ILLUMINATING UNIT
76-4

FIG. 14F
ILLUMINATING UNIT
76-5

FIG. 14G
ILLUMINATING UNIT
76-6

T2

Ton

OFF    ON

ON    OFF

EP 1 551 002 A2